# EUROPEAN PATENT APPLICATION

(11) **EP 1 017 217 A2**
(43) Date of publication of application: **05.07.2000**
(21) Application number: 99310477.7
(22) Date of filing: 23.12.1999
(51) Int. Cl.: H04M 3/523, H04M 7/00

(54) **Database workflow for multimedia networking and VoIP**

(30) Priority: 31.12.1998 US 224410
(71) Applicant: NORTEL NETWORKS CORPORATION, Montreal, Quebec H2Y 3Y4 (CA)
(72) Inventor: Glassman, David N., San Jose, CA 95134 (US)
(74) Representative: Lawrence, Malcolm Graham

(57) **Abstract**

An apparatus, along with its associated methods, that integrates a database workflow within a multimedia networking environment is described.

In one embodiment, a gatekeeper having a database that supports a networking workflow and a gateway communicatively coupled to the gatekeeper is described. The database may comprise an object-oriented database. The networking workflow may be a networking layer, session layer or other layer workflow. The gateway may comprise an IP intranet network interface, where the IP intranet network is capable of transporting real time packet switched traffic, separated from a network interface by a translation layer. The IP intranet network may be an H.323 network. The network interfaces include but are not limited to PSTN, ISDN, ATM, Cable TV or the internet. Also, the gatekeeper and gateway may be integrated within the same chassis.

## Description

The field of invention relates to multimedia networking. More specifically, the field of invention relates to the incorporation of database workflows for networking functions.

### Automatic Call Distribution Centers

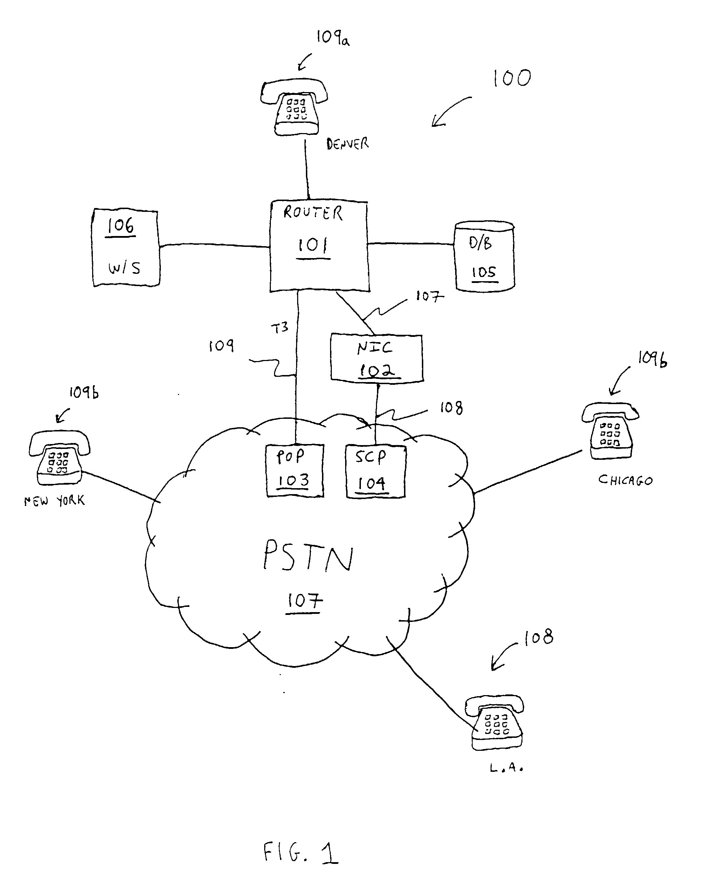

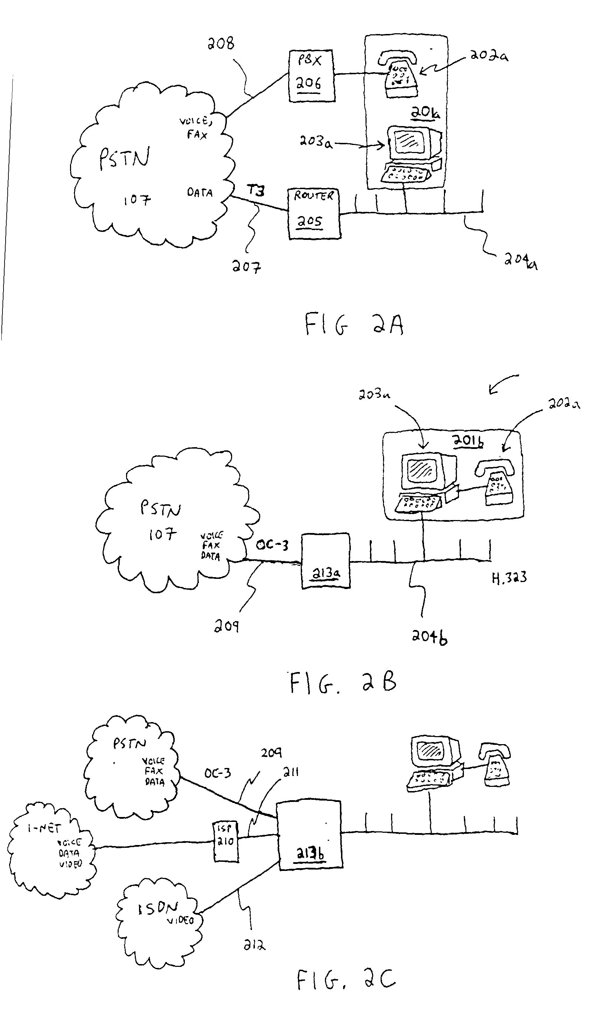

Automatic Call Distribution (ACD) centers are typically employed in corporate environments having sophisticated telephony services such as technical support and/or sales. The ACD is responsible for routing an incoming (i.e., customer's) call to a proper corporate agent having the necessary skill sets to handle the customer's call. For example, if a Spanish speaking customer requiring technical support calls the corporation's "1-800" number, the ACD is responsible for routing the customer's call to an available (or nearest available), Spanish speaking, technical support agent. Figure 1 shows a typical ACD center (also referred to as a pre-call router) 100.

Continuing with the example, the customer based in Los Angeles calls the corporate "1-800" number from his personal or office telephone 108. The call is directed through the Public Switched Telephone Network 107 (PSTN) to the ACD 100, located in Denver. Thus, the corporate "1-800" number is essentially the phone number of the ACD 100 itself.

When the customer's call comes into the ACD 100 through the Point of Presence (POP) switch 103 of the PSTN 107 along a physical layer connection 109 (such as a T3 line), the customer's call is "confirmed" before it is answered by the ACD 100.

Caller confirmation involves: 1) verification that the destination of the call is the ACD and 2) identification of the source of the call (the customer's location). This information is found via the ANI/DNIS information relating to the customer's particular call. The ANI provides the caller's location while the DNIS provides the caller's intended destination. This information may be obtained either from a reserved channel of the physical layer connection 109 or from the Service Control Point (SCP) 104 that is located within the PSTN 107 and maintained by the carrier. The ACD usually communicates with the SCP via a Network Interface Controller 102 (NIC).

Once caller confirmation is complete and accepted, the ACD 100 initiates an Integrated Voice Response Unit (IVRU) which is an automated voice directory system. The IVRU is responsible for identifying the basic skill sets that the customer requires. For example, the IVRU asks the caller to push a button corresponding to his language preference (e.g., English or Spanish) and his required area of service (e.g., sales, marketing, or technical support). The ACD 100 retains this data, referred to as skill sets, and uses it to properly route the call.

With the skill sets, the ACD 100 searches its database 105 for available agents having the required skill sets. The database 105 is a storage system that keeps track of the agents or groups of agents having particular skill sets. The ACD 100 also knows which agents are currently busy. Thus the ACD is capable of matching agents having particular skills (e.g., Spanish speaking with technical support) with the agents currently available. From this the ACD 100 can determine which agents are available to handle the call. Thus, skill sets and availability are an initial set of conditions against which the entire pool of corporate agents are screened and reduced prior to selection.

Additional conditions, such as flow control policies, may then be placed on the set of available agents having the proper skill sets. That is, Figure 1 shows three agent locations 109a, 109b and 109c which correspond to available Spanish speaking, technical support agents in Denver (where the ACD 100 itself is located), New York, and Chicago respectively. The ACD may select the agent at the Denver location 109a since that is the closest location to the caller's location in L.A. Clearly, a myriad of other conditions may also be required or desired in different instances.

Once a final agent or group of agents is selected, the router 101 places a new DNIS for the customer's call into the SCP 104. That is, the ACD 100 changes the caller's original DNIS (the corporate "1-800" number) to the specific DNIS value that corresponds to the selected agent.

A problem with current ACDs is a combination of granularity and bandwidth. Many ACDs employ a relatively modest storage system 102 and CPU resulting in limitations in the number of skill sets tracked per agent as well as limitations in the number of conditions that can be screened against the agent pool. Furthermore, the NIC 102 is typically capable of handling no more than 150-200 calls per second. Thus there is also a bandwidth bottleneck because of the ACD center's 100 dependence on the PSTN's SCP 104 to re-route the customer's call (via changing the SCP's 104 DNIS information for each caller).

### The Emergence of Packet Switched Telephony

Fig. 2a shows a traditional network configuration for a corporate campus. Typically there is both a telephone 202a and a computer 203a atop a corporate worker's desktop 201a. Unfortunately, two entirely separate network architectures having unique pieces of hardware are used to connect the worker's telephone 202a and computer 203a to the world outside his or her office. Traditionally, a PBX 206 is used to manage employee telephone calls across the PSTN 107 while a router 205 is used to translate packets between the employee's Local Area Network (LAN) 204a and the PSTN 107.

The need for two different networking schemes for telephones 202a and computers 203a stems from the inherently different requirements of telephony (voice) traffic versus computer (data) traffic. Voice traffic typically requires no more than a few hundred milliseconds of propagation delay between callers (whether they are across the street or across the world) while data traffic is generally tolerant of much greater delay. As such, voice traffic requires a dedicated point to point "pipe" from one caller to the other while data packets can "bounce" from node to node across the network acquiring comparatively substantial delay in the process. These two different networking approaches are referred to as "circuit switched" for voice traffic and "packet switched" for data traffic.

Recently, however, commodity priced semiconductor ICs that operate in the hundreds of Megahertz have emerged. The result is inherently shorter packet delay acquired at each node while the packet bounces through the network. Thus, it is now possible that voice traffic may travel in a packet switched fashion (rather than a circuit switched fashion) and stay within the required maximum delay time.

Packet switched telephony is highly desirable as it eliminates the "dual" networking topography of Figure 2a and allows for the single architecture of Figure 2b.
Under the dual topography of Figure 2a different media types (e.g., voice or data) travel through different equipment (e.g., PBX 206 or router 205). With the packet switched telephony approach of Figure 2b, all media travels across a single path (e.g., trunk 209 and LAN 204b) through the same equipment (gateway 213a). This results in lower equipment and maintenance costs for MIS managers.

ATM was once considered a technology that could transport voice and data over a single LAN architecture. ATM has packet switching features, however, ATM also has many connection-oriented features and is therefore generally not deemed a packet switched technology. ATM is seen more as an extension of traditional circuit switched telephony. Furthermore, ATM's connection oriented and pre-emptive queuing features result in high overhead and poor efficiency as compared to a purely IP based packet switched approach.

Thus far, the discussion has been limited to only the PSTN serving as the wide area network (WAN) outside than LAN. However, access to multiple networks is also desirable as shown in Figure 2c. That is, different networks besides the PSTN 107 (such as the Internet 215 or, for example, a private ISDN 216 service) may also require connectivity to the corporate campus.

As such not only must gateway 213b handle all different forms of media (e.g., voice, FAX, data, video, etc.) it must also handle all different sources of that media (e.g., PSTN, ISDN, the internet, etc.).

To help manage the transition to real time packet based traffic flow, the ITU-T has introduced the H.323 standard (hereinafter "H.323") to define and organize the assorted requirements and functions necessary to implement campus architectures similar to that shown in Figure 2c. H.323 employs IP (Internet Protocol) addressing rather than ANI/DNIS for voice traffic.

It is clear, however, that an intelligent and fast gateway 213b is highly desirable in order to manage all the sources of media as well as manage all the different types of media that flow from them.

Furthermore, the value of intelligence and speed increases as the role of the networking function becomes more sophisticated and complex. For example, referring back to Figure 1, consider an ACD having responsibility for managing not only traditional phone calls as discussed, but also e-mail, web inquiries, integrated web and voice inquiries, video calls etc. Further still, consider the expansion of new conditions. Not only must available agents have the correct expertise and speak the correct language they must also have at least the same desktop performance as the customer in order to fully communicate with him or her. Thus in light of their aforementioned inefficiencies, traditional ACDs are ill suited for the emergence of IP based real time traffic.

### Object Oriented Database Workflows

Object oriented database workflows are used to automate expensive administrative business procedures. Database workflow application programs typically run on higher end machines such as workstations and therefore have access to high-speed data storage devices and high performance CPUs. As such database workflows provide the level of intelligence and speed necessary to automate complicated business processes. "Intelligence" is a derivative of hardware and software sophistication.

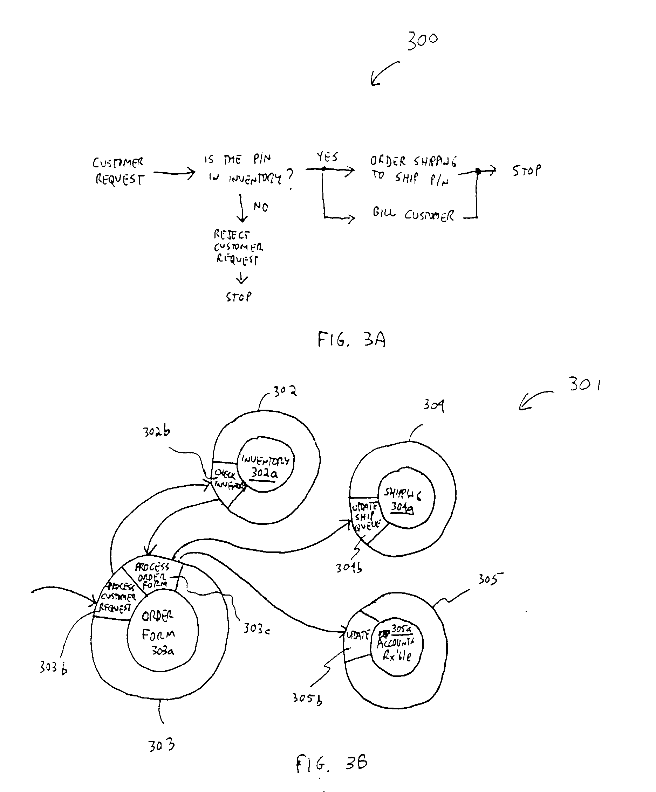

An example of a database workflow is shown in Figure 3. Figure 3a shows a sample business workflow 300. A customer request for a specific part number invokes an inquiry into the corporate inventory. If the part number is not available the request is rejected; if the part number is available the shipping department is told to deliver the part to the customer and the accounts receivable department is told to update its records. Figure 3b shows the workflow of Figure 3a reduced to an object oriented database environment 301. The database has four objects: an order form object 303, an inventory object 302, a shipment object 304 and an accounts receivable object 305. Each object has associated methods having exclusive access to its database. For example, the order form object 303 has a process order form method 303c and a process customer request method 303b which share exclusive access to the order form database 303a.

Thus, the method of Figure 3a is realized in Figure 3b. The customer request generates the check inventory method 302b which searches the inventory database 302a. If the search is positive, the process order form method 303c is invoked which creates an official order from the data within the order form database 303a as well as invokes the update ship queue method 304b and the update accounts receivable method 305b. These methods then update their respective databases 304a, 305b thereby informing the shipping department of a new shipping requirement and recording the sale in the corporate account.

What is needed is complex networking functionality, such as an ACD, having intelligence comparable to an automated database workflow such that multiple media types and multiple media sources may be effectively managed within the complex networking function.

In one embodiment, a gatekeeper having a database that supports a networking workflow is communicatively coupled to a gateway. The database may comprise an object-oriented database. The networking workflow may be a networking layer, session layer or other layer workflow. The gateway may comprise an IP intranet network interface, where the IP intranet network is capable of transporting real time packet switched traffic, separated from a network interface by a translation layer. The IP intranet network may be an H.323 network. The network interfaces include but are not limited to PSTN, ISDN, ATM, Cable TV or the internet. Also, the gatekeeper and gateway may be integrated within the same chassis.

In another embodiment, a gatekeeper having a database that supports an agent selection workflow and a gateway communicatively coupled to the gatekeeper is described. The database may be object oriented and may comprise an available agent object that contains the set of agents currently available. Further still, the object oriented database may comprise a tech support agent object that contains the set of agents having tech support skills, or a sales agent object that contains the set of agents having sales skills, or an additional conditions object that contains flow control policies.

In yet another embodiment a gatekeeper having a database that supports a networking workflow; a first server, where the first server stores a first media type and is communicatively coupled to the gatekeeper; and a gateway communicatively coupled to the gatekeeper is described. The database may have a plurality of workflow libraries organized by media type, which may include a voice library, a data library, or a FAX library. The workflow may comprise a parser coupled to a plurality of decision blocks where there is one of decision blocks per media type. There may also be a second server that stores a second media type and is communicatively coupled to the gatekeeper. The media types may include but are not limited to data, voice mail or FAX.

An embodiment of a method involves invoking an object method against a condition to produce at least one selected agent and directing real time traffic to the selected agent. The object may comprise an available agents object where the object method searches for available agents against the condition. The condition may comprise a technical expertise skill, a language skill, or a subset of agents from the corporate pool of agents. The object may also comprise a technical support agents object where the object method searches for technical support agents against a condition. The object may also comprise a sales agents object where the object method searches for sales agents against the condition. The object may also comprise an additional conditions object where the object method searches for agents meeting flow control policy requirements against the condition. The real time traffic may comprise real time voice traffic or real time video traffic. The real time traffic may be directed over a packet switched network including an IP based network.

Another embodiment of a method includes determining the media type of a network event and initiating a networking workflow unique to the media type. The method may further comprise directing the event to a decision block unique to the media type before initiating the networking workflow. The method may further comprise a parser that makes the determination of the media type of the event.
The method may be executed upon an object-oriented database. The networking workflow may be a pre-call routing workflow. It also may update an agent's file space in a server and send a message to the agent's system.

Other features and advantages of the present invention will be apparent from the accompanying drawings and from the detailed description which follows.

The present invention is illustrated by way of example and not limitation in the figures of the accompanying drawings, in which like references indicate similar elements, and in which:
**Figure 1** is a traditional ACD.
**Figure 2a** is a traditional corporate campus network.
**Figure 2b** is a corporate campus network that utilizes packet switched telephony technology.
**Figure 2c** is the corporate campus network of Figure 2b connected to multiple networks.
**Figure 3a** is a business process workflow
**Figure 3b** is the business process workflow of Fig. 3a at the database level.
**Figure 4a** is an embodiment of an ACD that incorporates a database workflow.
**Figure 4b** is a detailed depiction of the ACD of Figure 4a.
**Figure 5** is an ACD process.
**Figure 6a** is the organization of an embodiment of an object-oriented database.
**Figure 6b** is an embodiment of the ACD agent selection workflow that employs the object-oriented database of Figure 6a.
**Figure 7** is an embodiment of a centralized multimedia management station.
**Figure 8** is an embodiment of a workflow of the station of Figure 7.

An apparatus, along with its associated methods, that integrates a database workflow within a multimedia networking environment is described.

In one embodiment, a gatekeeper having a database that supports a networking workflow and a gateway communicatively coupled to the gatekeeper is described. The database may comprise an object oriented database. The networking workflow may be a networking layer, session layer or other layer workflow. The gateway may comprise an IP intranet network interface, where the IP intranet network is capable of transporting real time packet switched traffic, separated from a network interface by a translation layer. The IP intranet network may be an H.323 network. The network interfaces include but are not limited to PSTN, ISDN, ATM, Cable TV or the internet. Also, the gatekeeper and gateway may be integrated within the same chassis.

In another embodiment, a gatekeeper having a database that supports an agent selection workflow and a gateway communicatively coupled to the gatekeeper is described. The database may be object oriented and may comprise an available agent object that contains the set of agents currently available. Further still, the object oriented database may comprise a tech support agent object that contains the set of agents having tech support skills, or a sales agent object that contains the set of agents having sales skills, or an additional conditions object that contains flow control policies.

In yet another embodiment a gatekeeper having a database that supports a networking workflow; a first server, where the first server stores a first media type and is communicatively coupled to the gatekeeper; and a gateway communicatively coupled to the gatekeeper is described. The database may have a plurality of workflow libraries organized by media type which may include a voice library, a data library, or a FAX library. The workflow may comprise a parser coupled to a plurality of decision blocks where there is one of decision blocks per media type. There may also be a second server that stores a second media type and is communicatively coupled to the gatekeeper. The media types may include but are not limited to data, voice mail or FAX.

An embodiment of a method involves invoking an object method against a condition to produce at least one selected agent and directing real time traffic to the selected agent. The object may comprise an available agents object where the object method searches for available agents against the condition. The condition may comprise a technical expertise skill, a language skill, or a subset of agents from the corporate pool of agents. The object may also comprise a technical support agents object where the object method searches for technical support agents against a condition. The object may also comprise a sales agents object where the object method searches for sales agents against the condition. The object may also comprise an additional conditions object where the object method searches for agents meeting flow control policy requirements against the condition. The real time traffic may comprise real time voice traffic or real time video traffic. The real time traffic may be directed over a packet switched network including an IP based network.

Another embodiment of a method includes determining the media type of a network event and initiating a networking workflow unique to the media type. The method may further comprise directing the event to a decision block unique to the media type before initiating the networking workflow. The method may further comprise a parser that makes the determination of the media type of the event.
The method may be executed upon an object oriented database. The networking workflow may be a pre-call routing workflow. It also may update an agent's file space in a server and send a message to the agent's system.

These and other embodiments of the present invention may be realized in accordance with the following teachings and it should be evident that various modifications and changes may be made in the following teachings without departing from the broader spirit and scope of the invention. The specification and drawings are, accordingly, to be regarded in an illustrative rather than restrictive sense and the invention measured only in terms of the claims.

For example, as H.323 is directed to networking systems capable of transporting packet switched voice traffic, many embodiments discussed herein employ the H.323 standard. However it is important to note that any packet switched voice (and/or other real time) protocol or standard, whether currently in existence or yet to be developed, is adaptable to the embodiments discussed herein. As many embodiments simply use these protocols or standards as a basic layer, the exact means or mechanisms employed by any specific protocol or standard is transparent to the embodiments themselves.

Nevertheless, the emergence of Voice over IP (VoIP) and packet switched technologies for real time traffic generally (e.g., H.323) are an important motivation for integrating database workflow intelligence into a networking environment. That is, as the underlying network technologies (e.g., H.323) become increasingly versatile as represented in their ability to handle multiple media types across a single network architecture, the equipment implementing that architecture must be similarly versatile. Database workflow technology offers the degree of versatility needed to meet that challenge.

### VoIP ACD

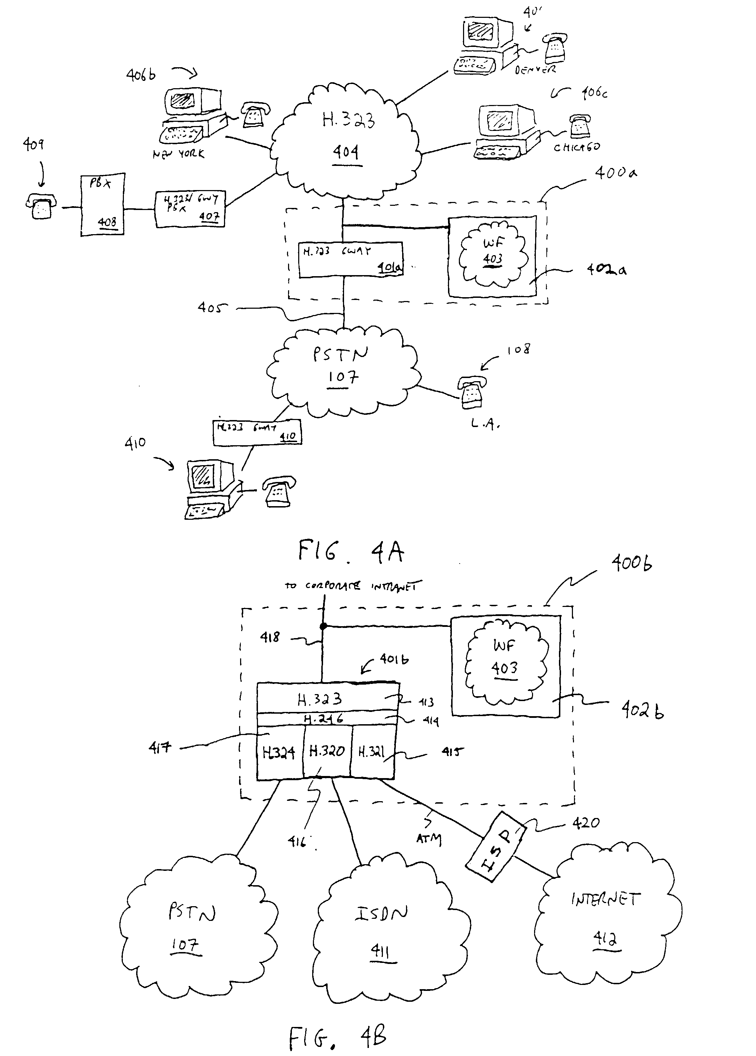

Figure 4a shows an ACD center 400 having an improved level of granularity and bandwidth that also transports real time traffic over a packet switched network. Figure 4a is directed to the same example described in Figure 1. That is, a caller based in L.A. calls the corporate "1-800" number from his/her telephone 108. The PSTN 107 directs the call to the corporate ACD 400 via the physical layer connection 405 (e.g. a T3 line) between the PSTN 107 and the ACD 400.

The call enters the ACD gateway 401. In this embodiment, the ACD gateway 401 is an endpoint on the H.323 corporate network 404 (also called a corporate intranet 404) that provides, two-way communication between H.323 based terminals (e.g., terminals 406a,b or c) on the corporate intranet 404 and an endpoint (e.g., H.324 telephone 108) on a different network such as PSTN 107.

Regardless of whether H.323 technology (or some other standard or protocol) is used, gateways enable two-way communication by providing the appropriate translation between different transmission formats and different communication procedures necessary for proper communication between endpoints existing on two different networks. For example, in order to provide communication between a terminal (e.g., terminal 406a) on the corporate intranet 404 and a terminal (e.g., telephone 108) on PSTN 107, the ACD gateway 401 of Figure 4a must translate the H.225 transmission format of the H.323 endpoint to/from the transmission format of the H.324 endpoint. A similar translation occurs for communication procedures such as capability exchange.

Thus gateways provide translation between different network technologies, regardless of the specific network technologies in use. Different networks are networks having different communication formats (e.g., frame structure) and/or procedures (e.g., call setup). A routing function is to be distinguished from a gateway function. Routing is related to the selection and/or identification of the most efficient path (or endpoint) traffic may travel (or travel to) in order to reach a destination point from a source point. Routing is therefore generally associated with determining the most efficient use of network resources. Frequently, a gateway function is integrated with a routing function within a single machine.

The ACD gateway 401 is also capable of communicating with other gateways, such as gateway 407 and gateway 410. Thus non-H.323 terminals connected to the corporate Intranet 404 (such as telephone 409) may communicate with terminals on the circuit switched network 107. Also, H.323 terminals (such as terminal 410) connected to the circuit switched network 107 may communicate with terminals on the H.323 corporate intranet 404. Thus, it is possible that any device connected to the PSTN 107 may communicate with any device connected to the corporate intranet 404 if gateways are properly employed and the endpoints are compatible with one another.

When the customer call enters the ACD gateway 401 a network event is sent to the gatekeeper 402. Regardless of the particular protocol or standard employed, gatekeepers generally provide call control services such as address translation, admission control, bandwidth control, zone management, call forwarding and call transfer. Whether or not the gatekeeper 402 of Figure 4 would fit under a standard's definition of gatekeeper, the tasks associated with the gatekeeper 402 are a form of gatekeeping as they perform admission control (e.g., caller confirmation) and call forwarding (e.g., agent or agent group selection). Thus, for purposes of convenience, this application will refer to entity 402b as gatekeeper. A gatekeeper is therefore any device or function that monitors or controls (as opposed to simply translates) traffic flow between two different networks. Routing may be viewed as within the gatekeeping function as routing involves controlling the path or direction of traffic flow. The gateway/gatekeeper combination may enable and manage traffic flow in both directions across the boundary separating the two different networks.

According to the embodiment shown in Figure 4a, a workflow 403 is an integral part of the ACD 400. That is, ACD tasks such as caller confirmation and/or agent selection are performed by database workflows similar to those described in reference to Figure 3. As discussed, workflows are intelligent. Intelligence stems from the use of sophisticated software, high-speed storage devices and/or high performance CPUs. Introduction of a similar hardware platform within the ACD 400 environment results in (when compared to some traditional ACDs) massive databases that may be searched and or processed in small amounts of time. Thus, the CPU and data storage platforms that are typical of machines running business workflows (e.g., a UNIX workstation) are generally sufficient. Of course, as the functional complexity grows, higher performance equipment may be used. Regardless, the granularity problem that limited the number of skill sets per agent as well as the number of conditions per call screening is avoided at least in part.

The hardware platform supporting the workflow 403 as well as the entire ACD 400 may have many different embodiments. A database supports a workflow if the workflow invokes methods and/or data from that database regardless of where the actual storage device resides. A workflow runs on or executes over a database. The high speed storage and high performance CPU that run the workflow 403 may be integrated with the ACD gateway 401 within the same frame chassis; or the gateway 401 and workflow 403 functions may be spread out into different hardware elements (such as a separate ACD gateway 401 in communication with a workstation or server responsible for running the workflow 403 as shown in Fig. 4). Furthermore, a gateway CPU may be the same high performance CPU that runs the workflow or the two processing elements may be split into separate processing cores. These aforementioned embodiments are meant to be illustrative and do not serve to limit the scope to these specific embodiments. Given the various options of available, interworkable processing cores and storage systems, many other embodiments exist that successfully integrate a gateway function with a workflow hardware platform.

Also, in the embodiment shown in Figure 4, there is no dependence on the Network Interface Controller or Service Control Point (102, 104 of Figure 1 respectively) to route the customer's call to the selected agent or group of agents. That is, the gatekeeper 402 does not update DNIS information within a SCP 104 of the PSTN 107 (referring briefly to Figure 1). Instead, the gatekeeper 402 permits the initiation of call setup between the customer and the selected agent over the corporate intranet 404. Whereas the traditional ACD shown back in Figure 1 requires the call to be re-rerouted across the PSTN 107, in this embodiment the call is routed across the corporate intranet 404 and the bandwidth problem associated with the NIC of traditional ACDs is avoided.

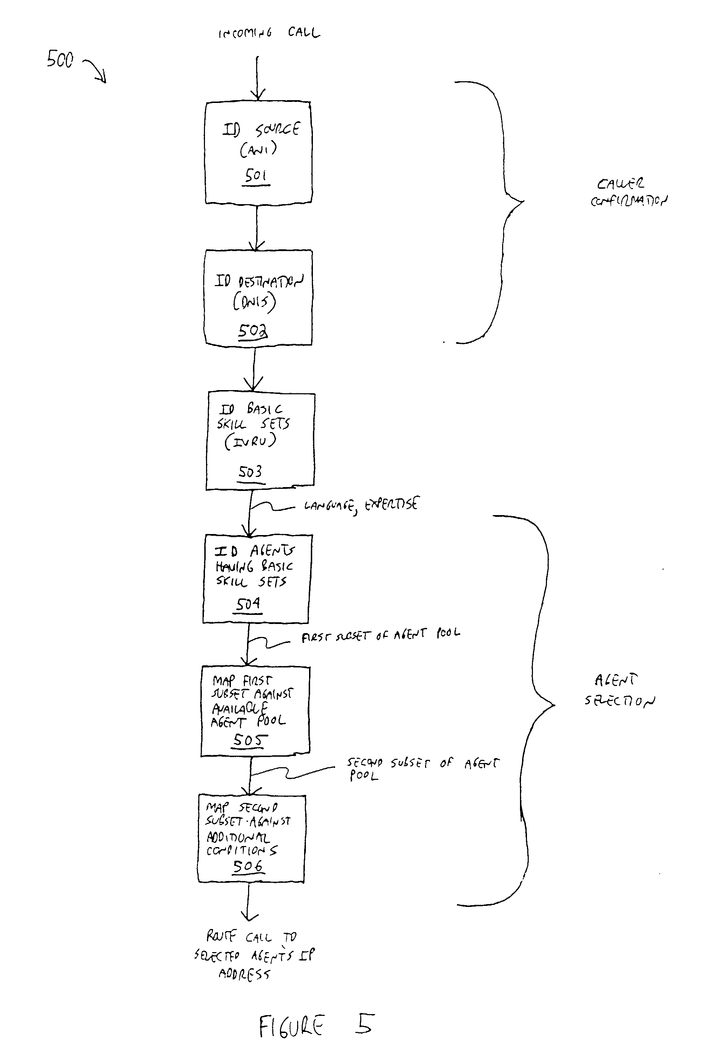

Figure 5 shows the functional processing associated with ACD 400. More specifically, Figure 5 shows the complete process 500 from caller confirmation to agent selection. The process 500 is similar to the operation of a traditional ACD. During caller confirmation, the source is identified 501 via the ANI and the destination is confirmed 502 via the DNIS. Skill sets and additional conditions are screened against the pool of available agents (blocks 504-506). From this an agent is selected.

Not all processing elements of process 500 require execution over the database. Essentially, the processes selected for operation over a database workflow are a matter of choice. For example, caller confirmation (blocks 501-502) may be done in hardware and software environments typical of traditional ACDs leaving only the agent selection process (blocks 504-506) to be performed over the database. Such an embodiment may be preferable, as only the agent selection process (because of the complexities of large skill set searching) is likely to require demanding processing from a database perspective. On the other hand, overhead constraints may make it easier to integrate caller confirmation and the IVRU within the workflow environment as well.

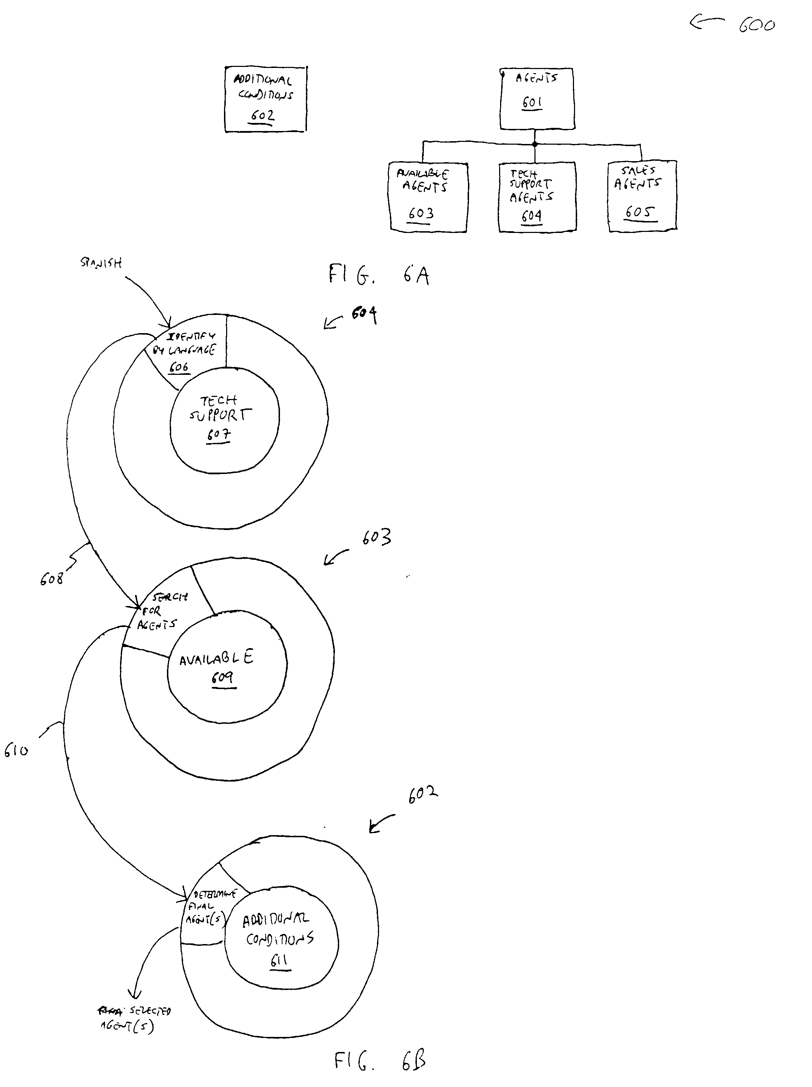

For simplicity, the embodiment discussed in relation to Figures 5 and 6 executes only the agent selection workflow (blocks 504-506) over the database. Figure 6a shows an embodiment of an object oriented database architecture 600 for the agent selection workflow having two main classes of objects: 1) agents 601 and 2) additional conditions 602. Although more traditional process oriented software programs may be employed to execute the workflow, the object oriented approach may be more efficient from a development cost perspective.

As shown in Figure 6a, this specific embodiment has an agents object 601 class having three inherent classes: available 603, tech support 604 and sales 605. Agents may be tracked or identified throughout the workflow, for example, by IP address or employee serial number. The available object 603 contains a database of all available agents within the corporation. The database adds and deletes specific agents dynamically with customer usage of the agent resource pool. The meaning of "available" need not be strict. That is, the threshold for availability may be based on a customer queue measured in minutes for each agent. In order to dynamically track the available agent pool, methods associated with the available object 603 database may use methods of a "intranet" object (not shown in Figure 6) responsible for monitoring and tracking traffic flow over the corporate intranet.

The tech support object 604 contains a database of all tech support agents within the corporation. In this embodiment, it contains a record or profile of the entire skill set (e.g., languages, technical specialties, experience level etc.) for each tech support agent as well as a record of each tech support agent's location, time zone, etc. This data is entered consistent with corporate records. The sales object 605 contains a database of all the sales agents within the corporation. Its organization is similar to the tech support object 604 database except the technical items are replaced with specific sales related skills such as expertise within specific markets.

Each of the three inherent classes 603, 604, 605 has methods unique to itself as well as methods common to the entire class. Methods associated with an object are also referred to as object methods. For example, the available object 603 may have an object method for identifying agents based on the customer queue for that agent. The tech support object 604 may have an object method for identifying tech support agents based on the specific technical areas they have been approved to provide support for. The sales object 605 may have an object method for identifying sales agents based on the specific markets they have been approved to sell in. However, all three classes may have an object method for identifying an agent's name based on his or her IP address.

The agent selection workflow (blocks 504-506 of Figure 5) is shown at the database level in Figure 6B. The workflow starts (in the example of this embodiment) with the preliminary IVRU information that the caller has requested a Spanish speaking tech support agent. The workflow employs the "identify by language" object method 606 of the tech support agent object 607. This method accepts "Spanish" as an input parameter and searches the encapsulated tech support database 607 profile for Spanish speaking skills to identify a first subset 608 of all Spanish speaking tech support agents within the corporation. Then the method requests the available object 603 to search its database 609 for any of the agents from the first subset 608 by invoking the "search for agents" object method 612. The "search for agents" method 612 accepts the first subset 608 as an input parameter. The available object 609 returns a second subset 610 containing all available, Spanish speaking tech support agents. Again, the subsets may track the agents in any number of ways including but not limited to IP address or employee serial number.

This second subset is then used as an input for the additional conditions object 602. The additional conditions object 602 is responsible for determining the proper agent based on various corporate policies such as (but not limited to) flow balancing. Thus, in this embodiment, the additional conditions database 611 records at least an estimated intranet 404 offered load parameter for each agent. In so doing, the additional conditions database 611 uses the aforementioned "intranet" object (not shown in Figure 6) to dynamically track traffic flow over the corporate intranet 404 as it relates to each agent. Agents near intranet bottlenecks will have higher offered load figures than agents near less active portions of the intranet 404. Other policies, such as a preference to route callers to the closest agent location (as discussed with reference to Figure 1), may also be implemented by keeping the proper data within the additional conditions database 611.

The "determine final agent(s)" object method 613 of the additional conditions object 602 maps the subset 610 of available, Spanish speaking tech support agents (e.g., by IP address or employee serial number) against its encapsulated additional conditions database 611 and returns with the agent (or group of agents) having the least offered load to the intranet. That is, the additional conditions object 602 determines the final (i.e., selected) agent or group of agents by "steering" corporate intranet traffic away from congested regions.

Once an agent or agents is selected, the incoming call is directed from the ACD gateway 401 to the IP address of the selected agent(s). Thus, the ACD 400 swaps the incoming DNIS with an IP address. At this point, the routing function of the ACD 400 is complete. Note the routing function of the ACD 400 (i.e., determination of the call destination via identification of the proper agent) is performed by the database workflow 403.

Because of their versatility, database workflows incorporated within networking applications allows for a wide variety of intelligent networking applications. A network function is a function within any of the OSI Reference Model layers (physical, data link, network, transport, session, presentation or application). A database having a network workflow is therefore any database workflow that performs a function associated with at least one OSI Reference Model layer. For example, the ACD 400 just described determines the destination of an incoming call. As such the ACD database workflow 403 is performing a networking layer function. Alternatively, the ACD workflow 403 just described may be viewed as call setup which is a typically viewed as a session layer function. Either way, the ACD workflow 403 is a network workflow as the network and session layers are OSI Reference Model layers.

The workflow of Figure 6 is just one embodiment. A multitude of different ACD agent selection workflows and database organizations are possible. For example, the agent class objects 603-605 may be an inherent class of a conditions object of which the additional conditions object 602 is also inherent. Further still, availability could be searched before agent skill sets. Policies of the type found in the additional conditions object 611 could be searched before or in between the skill set or availability searches. Many other types of searches may be performed as needed. Thus a multitude of different agent selection workflows exist.

Also, the embodiment described in reference to Figures 4, 5 and 6, limits the corporate intranet 401 to an H.323 based network. As discussed, the invention is not limited solely to H.323 applications. Any protocol or standard that supports packet switched voice (or other real time) traffic may be employed as the concept of integrating a workflow with a gateway is transparent to the actual protocols or standards the gateway translates between. For example, any IP based network (including H.323 as well as more traditional TCP/IP intranets having 802.3 or 802.6 endpoints) may be employed provided there is sufficient bandwidth (typically in the range of 100MB/s or beyond at the LAN) available to carry real time traffic. Real time traffic is traffic that cannot withstand significant delay. Circuit switched voice traffic, as discussed in relation to Figure 2, is an example of real time traffic.

Also, even though packet switched telephony is a motivating factor for integrating a workflow within an ACD, packet switched real time traffic is not an absolute requirement. Consistent with the notion that the invention is transparent to the specific network technology employed, non packet switched intranets (such as an ATM based network) are possible as well. Furthermore, the gateway itself is only required if two different networks are involved. In one embodiment, the database 105 of Figure 1 is an object oriented workflow. Thus embodiments exist where workflow technology is simply integrated into existing ACDs such as Figure 1. Similarly, embodiments may exist where a gateway is not used because translation is simply not required.

A gateway (when used) does not necessarily need to translate to a corporate intranet 404 either. Again, consistent with the notion that the invention is transparent to the specific network technology employed embodiments exist that do not employ a corporate intranet. For example, the gateway could connect two WANs. Further still, the corporate intranet may be "replaced" by a Cable TV network that transmits information (e.g., TV, video or other multimedia services) to homes rather than corporate offices. For example, in the Small Office Home Office (SOHO) environment, the agent selection workflow could route customer calls to a decentralized agent pool who work from home and have multimedia services via their cable TV carrier. Thus a wide variety of networking applications can make use of database workflow technology regardless of the specific network technology (e.g., H.323 or otherwise) or the specific environment (e.g., corporate intranet otherwise).

A discussed in reference to Figure 3, a device having the intelligence and speed to manage multiple types of media (such as voice, data, video, etc.) as well as multiple sources/sinks of that media (i.e., different networks such as PSTN, ISDN, the internet, ATM, H.323 etc.) is highly desirable.

Comparing Figure 4a with Figure 2c, the ACD router 400 of Figure 4a is only connected to the PSTN 107 whereas many applications may require connection to multiple networks as shown in Figure 2c. Figure 4b shows the ACD router 400b having a gateway 401b capable of, for example, translating corporate intranet 404 traffic with multiple networks such as the PSTN 107, an ISDN network 411 and the internet 412 via an ATM connection 415 to an internet service provider (ISP) 420.

The specific embodiment of Figure 4b shows a gateway 401b architecture consisting of an H.323 network interface 413, a translation layer 414 and three other network interfaces 415, 416, and 417 (corresponding to the ATM 415, ISDN 411 and the PSTN 107 respectively). Typically, regardless of the specific standards or protocols employed, gateways will have at least two different network interfaces and a translation layer. Network interfaces have signaling and physical connections consistent with their applicable standard. For example, concerning the embodiment of Figure 4b, the PSTN 107 network interface 417 and ISDN 411 network interface 416 are capable of communicating with an H.324 terminal and H.320 terminal respectively. Other network interfaces, for example, may include but are not limited to B-ISDN (H.310), ATM (H.321), GQoS-LAN (H.322), Mobile (H.324M) and POTS. In the embodiment of Figure 4b, the translation layer 414 is responsible for translating between the corporate intranet 404 and the three external networks 107, 411 and 412. The translation layer for H.323 based networks is specified in ITU-T H.246.

Thus the gateway 401b is responsible for managing the multiple networks that may connect to the ACD 400b. The gateway 401b communicates with the gatekeeper 402b along communication channel 418. In the embodiment shown in Figure 4, the communication channel is an H.323 extension of the corporate intranet 404. In this environment, the H.323 gateway 401 and gatekeeper 402b are typically separate pieces of hardware (e.g., the gateway 401b is a commercially available gateway and the gatekeeper is a workstation running the workflow 403). As discussed, many different hardware embodiments exist. For example, the gateway 401 may also be integrated into the same chassis with the gatekeeper 402 such that the communication channel 418 is not an external corporate intranet but rather an internal system backplane or other bus within the chassis. Whether the gateway 401 and gatekeeper 402 communicate externally over a network (such as corporate intranet 404) or internally over a system backplane or bus; in either case the gateway 401 and gatekeeper 402 are deemed "communicatively coupled".

### Centralized Multimedia Management Station

As discussed with reference to Figure 3, a device that has the intelligence to manage multiple forms of media (voice, data, video etc.) is highly desirable. That is, the ACD 400b of Figure 4b can manage traffic media beyond voice. For example, standard customer calls to the corporate "1-800" number will arrive via the PSTN 107 similar to the discussion regarding the embodiment of Figure 4a. However, customers may also attempt to correspond with the corporate agent pool via the corporate web page or through e-mail, both of which may arrive through the internet 412. Furthermore, sophisticated customers may attempt to have live video conferences with corporate agents via the ISDN network 411. Thus the ACD 400b of Figure 4b must operate within a multimedia environment. As database related workflows are highly versatile, they are ideally suited to manage multimedia environments.

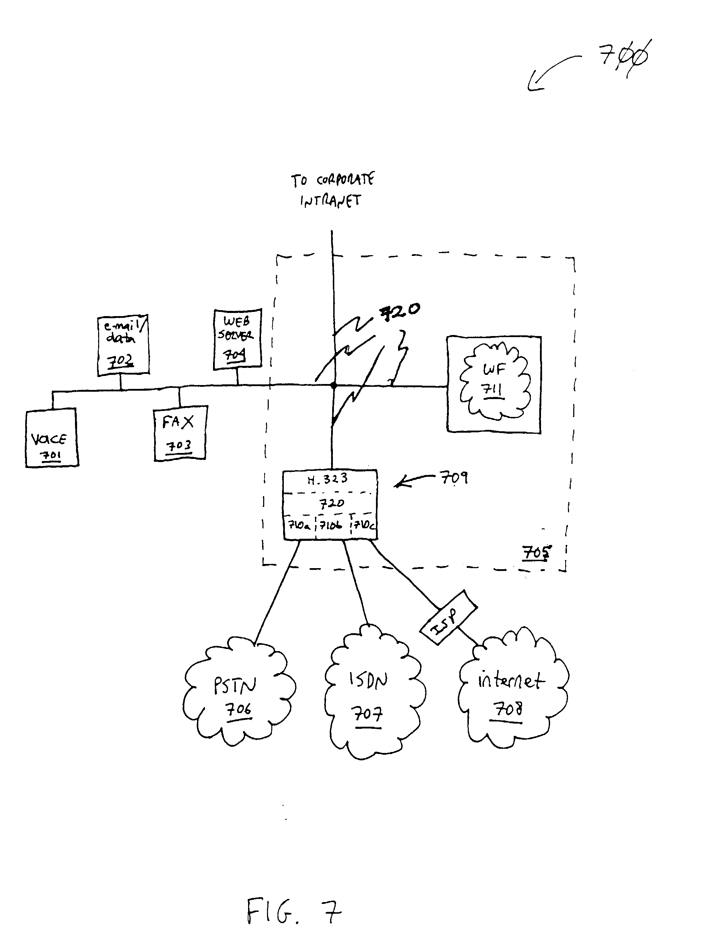

Figure 7 shows another embodiment that acts as a centralized multimedia management station 700 (hereinafter, "station") that handles the various forms of customer inquiries to corporate agents that arrive in a multimedia environment (e.g., e-mail, voice calls, video, FAX, etc.). The station 700 integrates a number of servers 701-704 with an ACD 705 (that is similar to the ACD 400 of Figure 4) in order to facilitate multimedia networking environments. In so doing, the station 700 acts not only as a pre-call router ACD but also a multimedia server.

Because of the versatility of database workflows and the underlying network, the station 700 is capable of (among other tasks): 1) selecting an agent to receive a real time voice call or real time video call; 2) storing e-mail or FAX or video or voice-mail sent to a specific agent; and 3) selecting an agent to receive and then storing e-mail or FAX or video or voice-mail sent to a particular agent skill group (e.g., "sales" as opposed to a specific agent).

There are four servers 701-704 in the embodiment of Figure 7. Each server is dedicated to a particular type of multimedia traffic. The voice server 701 stores voice mail, the e-mail/data server 702 stores e-mail messages or other data files, the FAX server 703 stores FAX messages. The web server 704 manages the corporate web page which may be configured to demand additional station 700 functionality. For example, the corporate web page may enable customers to directly purchase products. Thus the web server 704 will generate purchase orders that may be at least partially processed within the station 700 workflow 711 itself. Additional media server embodiments are possible such as a video-mail server.

Under worst case conditions, the various forms of media (voice, e-mail, etc.) may enter the gateway 709 from any of the various networks (e.g., PSTN 706, ISDN 707, internet 708) to which the gateway 709 is connected. The gateway 709 of station 700 is similar to the gateway 401 already discussed in relation to Figure 4 and is responsible for managing the potentially multiple network interfaces. Once the network related traffic passes a network interface layer 710a,b,c, it is typically converted into some format.by the translation layer 720. This format may be a corporate intranet packet in cases where the gateway 709 and workflow 711 functions operate on separate pieces of hardware. Alternatively, the format may be the data format used within the system backplane or other system bus if the workflow 711 and gateway 709 functions are integrated into a single machine.

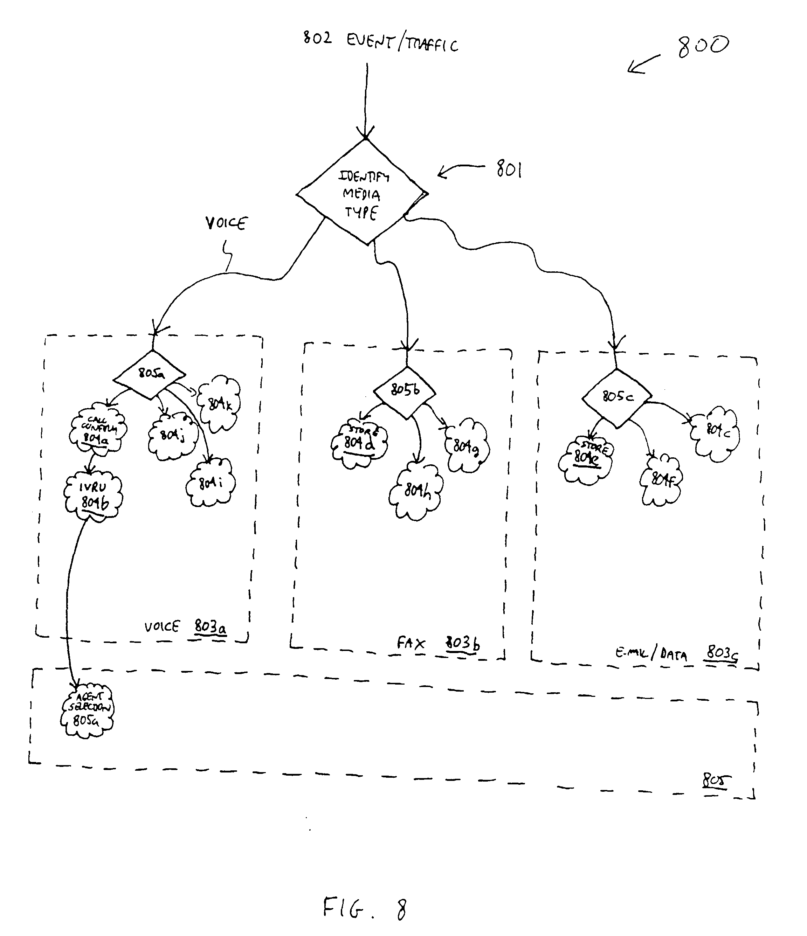

Generally, the media type (voice, e-mail, etc.) is identified by tagging the incoming traffic within a header or control field with a media type identifier. The workflow 711 ultimately makes use of this tag to initiate media dependent workflows. Thus the station 700 has the ability to recognize the different media types and execute different workflows accordingly. A database workflow 800 for the station 700 is shown in Figure 8. The database parser 801 of Figure 8 immediately identifies the media type of the incoming network event or traffic 802. Once the media type is identified, specific workflows designed to operate solely on that form of media may be initiated.

In one embodiment, as shown in Figure 8, the workflow is organized into objects or libraries 803a,b,c which contain the media dependent database workflows 804. Thus, each library or object 803 contains media dependent workflows 804 that are specific to a certain type of media. Such workflows are deemed unique to the media type. Any processes that are inherently media independent (such as the agent selection process of Figures 5 and 6) may be used when needed as well. Thus a media independent library or object 805 may also exist. Please note that the agent selection may also be media dependent in the sense that the agent's desktop equipment may be viewed as additional skill set criteria. That is, an agent must have real time video equipment to entertain a real time video customer call.

An example of the operation of the embodiment of station 700 follows. An e-mail from the internet 708 for a specific agent, a voice call for the corporate "1-800" number from the PSTN 706 and a FAX for another specific agent from the ISDN network 707 all arrive at the gateway at approximately the same time. The gateway 709 translates the traffic to the H.323 format and prioritizes the traffic. For this example, the gateway 709 places the voice call, the FAX and then the e-mail in its outbound queue. Less intelligent gateways may simply handle all incoming traffic in FIFO fashion. Of course if the prioritization method were specified by the applicable standard or protocol the gateway must behave accordingly.

The voice call, FAX and e-mail are sent to the workflow in order. Referring to Figure 8, the parser 801 uses the appropriate header information to first determine what type of media (e.g., voice, FAX or e-mail) the incoming event is characterized by. Since the voice call arrives first, the parser 801 determines that the incoming event is voice related and invokes the voice workflow library or object 803a. The workflow library also has a voice decision block 805a which is responsible for determining which specific workflow is to be initiated as a result of the specific event that arrives. For example, by using additional header information the voice decision block knows the incoming event is a general customer call to the "1-800" number.

In this embodiment, unlike the embodiment discussed in relation to Figure 4, caller confirmation 805a and the IVRU function 804b are performed by the workflow 711. They may instead be performed by another server (e.g., an IVRU server - not shown in Figure 7) within the corporate intranet. Once the IVRU workflow 804b determines, for example, that a Spanish speaking tech support agent is needed, an agent selection workflow 805a similar to the one discussed in relation to Figures 4, 5 and 6 is initiated. The agent is identified and the voice call is directed over the packet switched intranet. Again, the workflows may operate over an object oriented database although this is not an absolute requirement.

Similarly, when the parser 801 identifies the second event as an incoming FAX the parser 801 invokes the FAX workflow library 803b which also has a FAX decision block 805b. The FAX decision block 805b identifies the nature of the event (e.g., an incoming FAX requiring storage on the FAX server 703) and executes an appropriate workflow 804d (e.g., which identifies the agent to whom the FAX is directed and updates that agent's "FAX mailbox" on the FAX server 703). In this example, the e-mail is handled similar to the FAX. That is the parser 801 identifies the event as e-mail related (or more generally, "data") which invokes the e-mail/data library or object 803c. The e-mail/data decision block 805c identifies the event and initiates the proper e-mail/data workflow 804e which stores the e-mail message on the e-mail/data server 704. Both the FAX and e-mail/data workflows 804c,d could also send the specific destination agents a message that updates the "in" boxes on their desktop system.

It is important to note that other architectural embodiments of system 700 exist. For example, Figure 7 shows the various servers interconnected on a local LAN 720 which is an extension of the corporate intranet. The entire system could be integrated within a single chassis. That is, for example, each "server" is actually a partitioned region of a database platform within a single piece of hardware. From a software perspective each server may be viewed as its own object. Other embodiments that are a mixture of partitioned space within a single chassis and external servers that are communicated with over the corporate intranet are also possible.

Furthermore, as discussed, other network interfaces are possible. That is, the various embodiments are not limited to those networks shown in Figure 7. For example, the corporate intranet may be "replaced" by a Cable TV network (e.g., a Schedule 5 based network). In such an application, the station 700 is a multimedia center that services homes rather than corporate desktops.

Thus an ACD and multimedia station having the intelligence to manage multiple types of media and multiple sources of that media has been described.

## Claims

1. An apparatus, comprising:
a) a gatekeeper having a database that supports a networking workflow; and
b) a gateway, said gateway communicatively coupled to said gatekeeper.

2. The apparatus of Claim 1 wherein said database further comprises an object oriented databse.

3. The apparatus of Claim 1 wherein said networking workflow further comprises a networking layer workflow and/or a session layer workflow.

4. The apparatus of Claim 1 wherein said gateway further comprises an IP intranet network interface, said IP intranet network capable of transporting real time packet switched traffic, said IP intranet network interface separated from a network interface by a translation layer.

5. The apparatus of Claim 4 wherein said IP intranet network is an H.323 network.

6. The apparatus of Claim 4 or Claim 5 wherein said network interface is a PSTN network interface, an ISDN network interface, an ATM network interface, or an internet network interface.

7. The apparatus of Claim 1 wherein said gateway further comprises a cable TV network interface separated from a network interface by a translation layer.

8. The apparatus of Claim 1 wherein said gatekeeper and said gateway are integrated within the same chassis.

9. An apparatus, comprising:
a) a gatekeeper having a database that supports an agent selection workflow; and
b) a gateway, said gateway communicatively coupled to said gatekeeper.

10. The apparatus of Claim 9 wherein said database is an object oriented database.

11. The apparatus of Claim 10 wherein said object oriented database further comprises (i) an available agent object that contains the set of agents currently available, (ii) a tech support agent object that contains the set of agents having tech support skills, (iii) a sales agent object that contains the set of agents having sales skills, or (iv) an additional conditions object that contains flow control policies.

12. The apparatus of Claim 10 wherein said gateway and said gatekeeper are integrated within the same chassis.

13. The apparatus of Claim 10 wherein said gateway further comprises an IP intranet network interface, said IP intranet network capable of transporting real time packet switched traffic, said IP intranet network interface separated from a network interface by a translation layer.

14. An apparatus, comprising:
a) a gatekeeper having a database, said database supporting a networking workflow;
b) a first server, said first server storing a first media type, said first server communicatively coupled to said gatekeeper; and
c) a gateway, said gateway communicatively coupled to said gatekeeper.

15. The apparatus of Claim 14 wherein said database further comprises a plurality of object oriented workflow libraries organised by media type.

16. The apparatus of Claim 15 wherein said plurality of object oriented workflow libraries further comprise (i) a voice library, (ii) a data library, or (iii) a FAX library.

17. The apparatus of Claim 14 wherein said workflow further comprises a parser coupled to a plurality of decision blocks, one of said decision blocks per media type.

18. The apparatus of Claim 14 further comprising a second server, said second server storing a second media type, said second server communicatively coupled to said gatekeeper.

19. The apparatus of Claim 14 wherein said first media type is data, FAX or voice mail.

20. A method comprising:
a) invoking an object method against a condition to produce at least one selected agent; and
b) directing real time traffic to said selected agent.

21. The method of Claim 20 wherein said object further comprises an available agents object and said object method searches for available agents against said condition.

22. The method of Claim 21 wherein said condition further comprises a technical expertise skill, language skill, or a subset of agents from the corporate pool of agents.

23. The method of Claim 20 wherein said object further comprises (i) a technical support agents object and said object method searches for technical support agents against said condition, (ii) a sales agents object and said object method searches for sales agents against said condition, or (iii) an additional conditions object and said object method searches for agents meeting flow control policy requirements against said condition.

24. The method of Claim 20 wherein said real time traffic further comprises real time voice traffic or real time video traffic.

25. The method of Claim 20 wherein said directing real time traffic to said selected agent further comprises directing said real time traffic over a packet switched network.

26. The method of Claim 25 wherein said packet switched network is an IP based network.

27. A method comprising:
a) determining the media type of a network event; and
b) initiating a networking workflow unique to said media type.

28. The method of Claim 27 wherein said method is executed upon an object oriented database.

29. The method of Claim 27 or Claim 28 wherein said networking workflow is a pre-call routing workflow.

30. The method of any one of Claims 27 to 29 wherein said networking workflow updates an agent's file space in a server and sends a message to the agent's system.

31. The method of any one of Claims 27 to 30 wherein said media type is real time voice, FAX, or data.

32. The method of any one of Claims 27 to 31 further comprising (i) directing said event to a decision block unique to said media type before initiating said networking workflow and/or (ii) making said determination of said media type of said event by means of a parser.
